# EUROPEAN PATENT SPECIFICATION

(11) **EP 4 499 263 B1**
(45) Date of publication and mention of the grant of the patent: **21.01.2026**
(21) Application number: 23720507.5
(22) Date of filing: 28.03.2023
(51) Int. Cl.: B01D 46/00, B01D 46/52

(54) **FILTER ELEMENTS AND AIR CLEANER**
FILTERELEMENTE UND LUFTREINIGER
ÉLÉMENTS FILTRANTS ET FILTRE À AIR

(30) Priority: 28.03.2022 EP 22164878
(43) Date of publication of application: 05.02.2025
(73) Proprietor: DONALDSON COMPANY, INC., Bloomington, MN 55431 (US)
(72) Inventor: VERSTRAETE, Mathijs, Bloomington, MN 55431 (US); DE WOLF, Marc, Bloomington, MN 55431 (US)
(74) Representative: IPLodge bv
(86) International application number: PCT/US2023/065055
(87) International publication number: WO 2023/192871

(56) References cited:
- EP-A1- 2 414 071
- EP-A1- 3 616 770
- WO-A1-2005/079954
- US-A1- 2018 339 254

## Description

### Technical field

The present disclosure relates to filter constructions for filtering fluids, such as liquids or gases, such as for instance air. This disclosure relates to filter elements, such as for instance straight through flow filter elements, and assemblies employing such filter elements, as well as to an associated removable housing cover.

### Background art

Straight through flow filter elements have been used in various systems for filtering fluids such as gases or liquids. Straight through flow filters typically have an inlet face (or end) and an oppositely disposed outlet face (or end). During filtering, the fluid to be filtered flows in one direction upon entering the filter at the inlet face, and has the same general direction of flow as it exits the outlet face. Typically, a straight through flow filter is installed in housing, for use. After a period of use, the filter requires servicing, either through cleaning or complete replacement of the filter. A seal is necessary between the filter and a portion of the housing in which the filter is placed in use, to ensure proper filtering of the fluid flow through the arrangement.

In practice, servicing the filter element in the housing is often not straight forward, as there are space constraints in the associated vehicle around the filter housing and/or the filter housing is mounted at a relatively elevated position within the vehicle. The access opening to the filter housing may also not be easily reachable by a servicing person. The access opening of a filter housing is often also oriented upwardly in use, adding further complexity in servicing. In such configurations, it is preferred that servicing the filter element can be performed in a blindfold manner, i.e., without a need to actually see the internal portion of the housing.

EP2414071B1 discloses a filtration assembly comprising a straight through flow filter element which comprises lugs that form a pivot axis for installation of the filter element, in which the pivoting movement especially allows the insertion of a radial seal of the filter element into a corresponding outlet arrangement of the housing. Improvements in straight through flow filters and their assembly as described in EP2414071B1 are desirable, especially in the area of improving the fixation of the position of the element within the filter housing after installation. EP 3 616 770 A1, US 2018/339254 A1 and WO 2005/079954 A1 show further relevant prior art documents.

### Summary of the disclosure

It is an objective of the present disclosure to provide a filter assembly according to claim 1, to provide associated filter element, according to the second independent claim 10.

In a first aspect of the present disclosure, an air cleaner or air cleaner assembly is disclosed. The air cleaner comprises a housing, the housing comprising:
i. a surrounding housing-wall defining an open interior;
ii. an inlet arrangement; and
iii. an outlet arrangement.

The inlet arrangement and outlet arrangement are preferably at opposite ends of the housing. The housing defines an access opening in communication with the open interior, preferably at its upper side or portion.

The air cleaner comprises a cover removably secured to the housing over the access opening, for instance in a pivotable manner.

A filter element is operably held and oriented for selective removal within the open interior between the inlet arrangement and outlet arrangement.

The filter element comprises:
i. a media pack, preferably having inlet and outlet flow faces, preferably having opposite inlet and outlet flow faces; and
ii. a seal member attached in a sealing manner (e.g., secured; for the purpose to the present disclosure, "attached in sealing manner" comprises both permanent or removable attachment) to the media pack; the seal member forming a releasable seal with a sealing surface in the housing.

The surrounding housing-wall defines a pair of opposing receiving V-shaped grooves, each of the grooves being in open communication with the access opening and being located closer to the outlet arrangement than the inlet arrangement.

The V-shaped grooves are preferably defined by a first leg positioned more remotely from the outlet arrangement and a second leg positioned closer to the outlet arrangement, the legs being connected by a, preferably curved, connection section.

The filter element comprises first and second protrusions extending from opposing sides of the filter element and arranged along a common axis. These first and second protrusions are adapted and arranged within the receiving grooves such that the filter element can be rocked about a pivot axis defined by pivot points of the first and second protrusions within the housing to rock or pivot the filter element into sealing engagement with the housing.

The protrusions are preferably generally L-shaped and comprise a generally L-shaped cross-section comprising a first leg and a second leg, connected by an (preferably rounded) elbow connection portion, the elbow connection portion being arranged and adapted to serve as the pivot point for the filter element in the housing.

It is an advantage of protrusions comprising a generally L-shaped cross-section, over known cylindrical protrusions or lugs known from the prior art, that they can be made more resistant to forces exerted to them during installation and during use.

Also, the asymmetry introduced by an L-shape, can be used advantageously in currently commercially available housings having opposed receiving V-shaped grooves. Upon pivoting the filter element around the pivot points in the V-shaped grooves, rotation of the protrusions and thus filter element is blocked in at least a first rotation direction.

As a result, no additional structures are needed to obtain this blocking effect. It will be appreciated by the skilled person that all movement, whether it is translation or rotation, of a filter element in a housing is preferably avoided during use, as it may for instance cause a breaking of a sealing surface.

According to preferred embodiments of the present disclosure, the first leg of the protrusions is in contact (and e.g., aligned or parallel) with the first leg of the V-shaped grooves, thereby blocking a movement of the filter element in a direction towards the inlet arrangement and blocking a rotation of the element around its pivot points in a first rotation direction.

According to preferred embodiments, the first leg of the V-shaped grooves is about perpendicular or perpendicular to an axis of the filter element and/or an axis of the filter housing.

It is an advantage that some important forces acting on the filter element during use, related to the acceleration of the associated vehicle, are perpendicular onto the first leg of the V-shaped grooves, when the filter element is placed in a horizontal position, preferably in filter housing receiving the filter element as such and having an axis which is horizontal, which is a common configuration.

The positioning of the first leg of the protrusions on the filter element can then be such that it extends along a direction perpendicular to an axis of the filter element, simplifying an associated plastic moulding production process.

According to preferred embodiments, the second leg of the protrusions is in contact with the curved connection section and/or with the second leg of the V-shaped grooves.

It was shown that this is an optimal configuration for protrusions in view of providing a smooth pivot movement.

According to preferred embodiments, the second leg of the protrusions is substantially shorter than the first leg of the protrusions. It can for instance be within the range of 2 to 50% or within the range of 5 to 30% of the length of the first leg of the protrusions.

According to preferred embodiments, the generally L-shaped protrusions comprise one or more lateral recesses or slots, and/or internal openings, and/or gaps. According to preferred embodiments, the generally L-shaped protrusions comprise a set of individual structures which are not connected. It is an advantage that manufacturing processes can be simplified and that a relative reduction of material can be achieved without impacting the disclosed functionality of the generally L-shaped protrusion.

According to preferred embodiments, the cover comprises a locking structure being arranged and adapted to block a movement of the protrusions and thus filter element in a direction towards the outlet arrangement and/or in a direction along the insertion/removal direction of the filter element.

According to preferred embodiments, the locking structure is arranged and adapted to block a rotation of the element around its pivot point in a second rotation direction (opposite to the first rotation direction).

The locking structure can for instance comprise one or more fin or rib structures.

According to preferred embodiments, the locking structure comprises cover slots for receiving the protrusions.

According to preferred embodiments, the locking structure comprises a first portion which is adapted and arranged for being received in the V-shaped grooves in between the protrusions and the second leg of the V-shaped groove.

According to preferred embodiments, the first portion is complementary to the protrusion with respect to the V-shaped grooves.

According to preferred embodiments, the locking structure comprises a second portion which is adapted for locking the position of the filter element along the axis of the filter element and/or the housing, and which is not received by the V-shaped groove, thereby blocking a movement of the filter element in a direction towards the inlet arrangement and blocking a rotation of the element around its pivot points in the first rotation direction.

According to preferred embodiments, the second leg of the V-shaped groove forms an angle with the first leg of the V-shaped groove which is the range of 30° to 95°, preferably within a range of 30° to 85°.

According to preferred embodiments, the cover is removably mounted in a pivotable manner around a pivot axis adjacent to the access opening.

According to preferred embodiments, the filter element further comprises a handle which is suitable for accommodating one or more fingers of an adult human hand arranged adjacent to the inflow face.

According to preferred embodiments, the cover is adapted and arranged for being locked in a fixed position with respect to the housing when closed and comprises a contact surface for contacting the handle of the filter element in order to provide an additional position fixation of the filter element in the housing.

In a second aspect of the present disclosure, a filter element is disclosed (preferably for use in an air cleaner according to any of the embodiments of the first aspect), comprising:
i. a media pack, preferably having inlet and outlet flow faces, preferably having opposite inlet and outlet flow faces;
ii. a circumferential seal member attached (e.g., secured) in a sealing manner to a periphery of the media pack; the seal member adapted for forming a releasable seal with a sealing surface in the housing; and
iii. wherein the filter element comprises first and second protrusions extending from opposing sides of the filter element and arranged along a common axis; the first and second protrusions being adapted and arranged such as to define a pivot axis defined by pivot points of the first and second protrusions within the housing in order to rock or pivot the filter element into sealing engagement with the housing; and
wherein the protrusions comprise a generally L-shaped cross-section (e.g., along a plane perpendicular to the common axis) comprising a first leg and a second leg, connected by a rounded elbow connection portion, the elbow portion being arranged and adapted for serving as the pivot point for the filter element in the housing.

According to preferred embodiments, the first leg of the protrusions (or a side surface thereof, e.g. the surface to be positioned adjacent to the first leg of the V-shaped groove, in use) extends in a direction perpendicular to a longitudinal axis of the filter element.

According to preferred embodiments, the second leg of the protrusions extends in a direction which forms an angle with the direction of the first leg of the protrusion which is within the range of 30° to 150°.

According to preferred embodiments, the filter element comprises a support structure adjacent to at least one of the inlet flow face and the outlet flow face and connected in a sealing manner to the respective flow face, and a radial or axial seal supported by a periphery of the support structure.

According to preferred embodiments, the filter element comprises a shell structure around a periphery of the media pack over at least a portion of an axial length of the media pack, the shell structure comprising a support and reinforcement structure for each of the protrusions, the support structures each abutting on a virtual planar side surface, from which the protrusions extend.

According to preferred embodiments, the filter element comprises a handle structure, which preferably extends from the shell structure.

According to preferred embodiments, the protrusions extend towards and abut a plane defined by a planar outer surface of the shell or the media pack.

According to preferred embodiments, the support structure also abuts and is coplanar with a plane defined by a planar outer surface of the shell or the media pack.

According to preferred embodiments, the protrusions have a height H within the range of 2 to 3 cm.

According to preferred embodiments, the protrusions have a width W within the range of 1 to 2 cm.

In a third aspect of the present disclosure, a cover for a filter housing, preferably comprising a pivoting structure at a first end is disclosed, wherein the cover further comprises a locking structure being arranged and adapted to block a movement of a filter element according to any of the embodiments of the second aspect in an air cleaner according to any of the embodiments of the first aspect in a direction towards the outlet arrangement of the housing and/or in a direction along the insertion/removal direction of the filter element for the housing, and to block a rotation of the element around its pivot point in a second rotation direction.

Features and advantages disclosed for one of the above aspects of the present disclosure are hereby also implicitly disclosed for the other aspects, mutatis mutandis, as the skilled person will recognize.

### Brief description of the drawings

The disclosure will be further elucidated by means of the following description and the appended figures.
Fig. 1 shows a prior art air cleaner and associated filter element.
Fig. 2 illustrates a projected view of a filter element according to embodiments of the present invention.
Fig. 3 (a) to (d) represent different views of the embodiments depicted in Fig. 2.

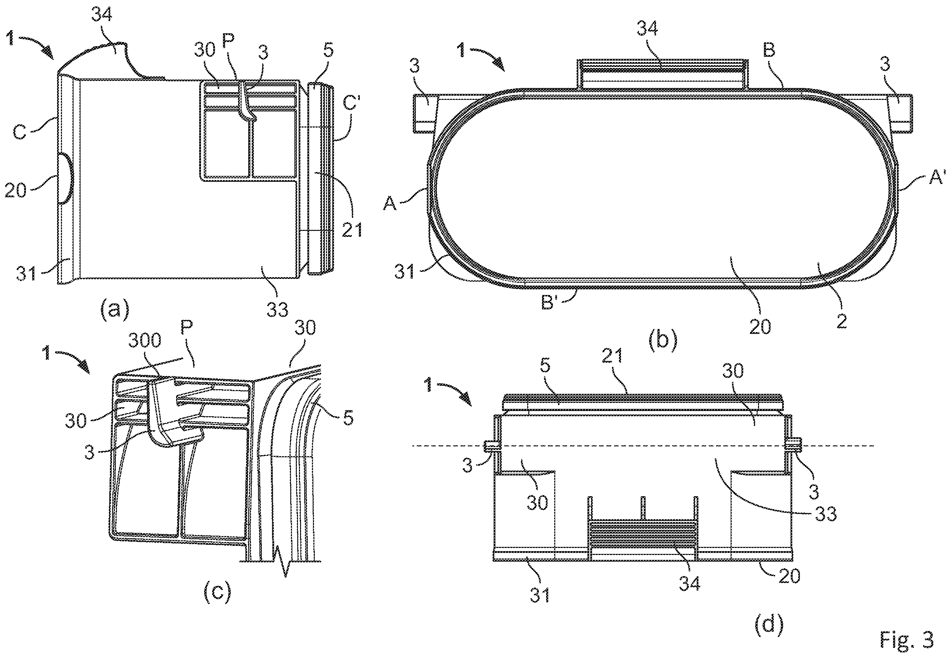

Fig. 3(a) is a side view; Fig. 3(b) is a side view onto the inlet flow face. Fig. 3(c) is an enlarged 3D view of a feature of Fig. 3(a). Fig. 3(d) is a top view.

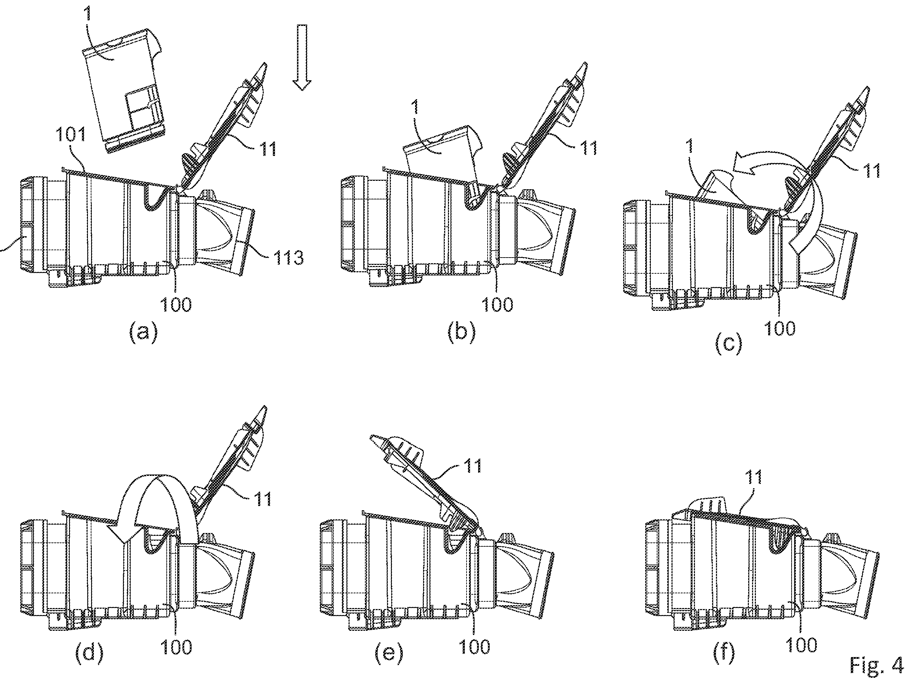

Fig. 4 illustrates an air cleaner or filter assembly according to embodiments of the present invention, and illustrates the process for inserting a filter element in the air cleaner as steps (a) to (f).

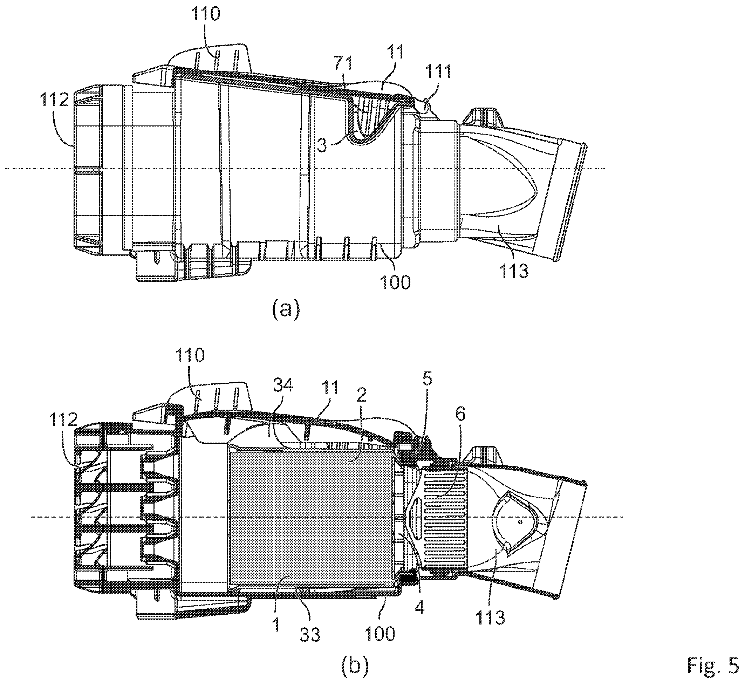

Fig. 5 (a) provides more detail of Fig. 4 (f).
Fig. 5 (b) is a cross-sectional view of Fig. 5(a).

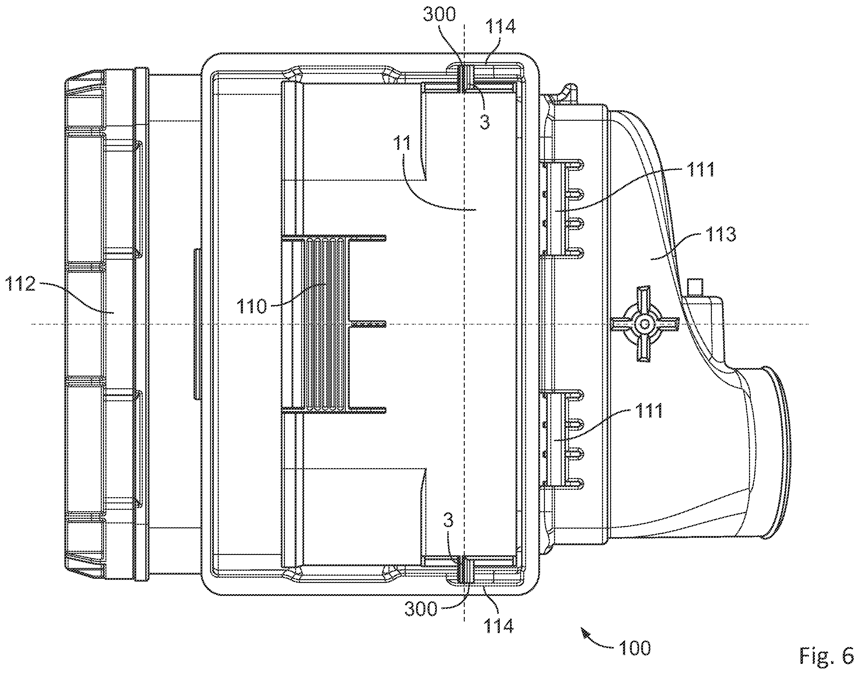

Fig. 6 is a top view of the air cleaner according to Fig. 4.

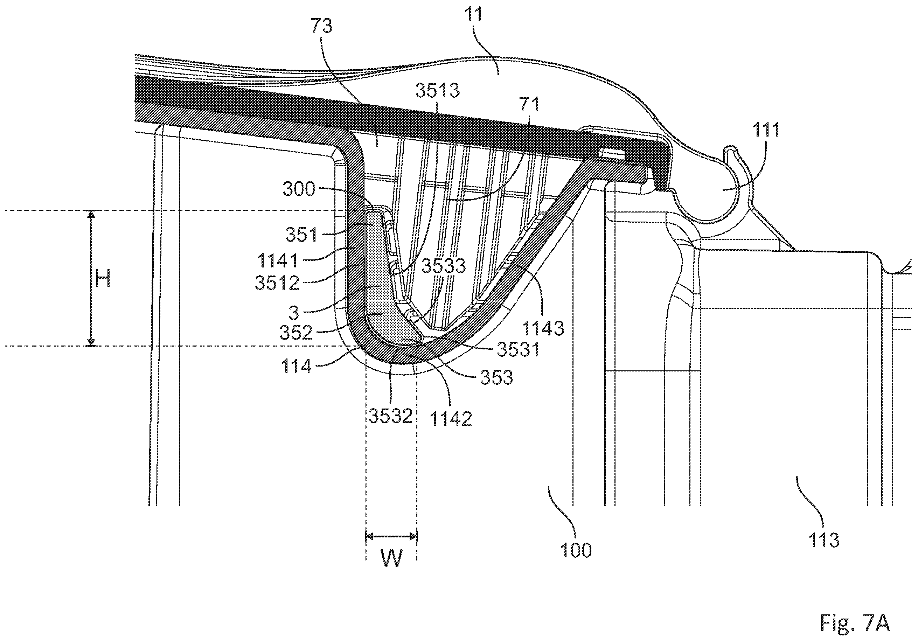

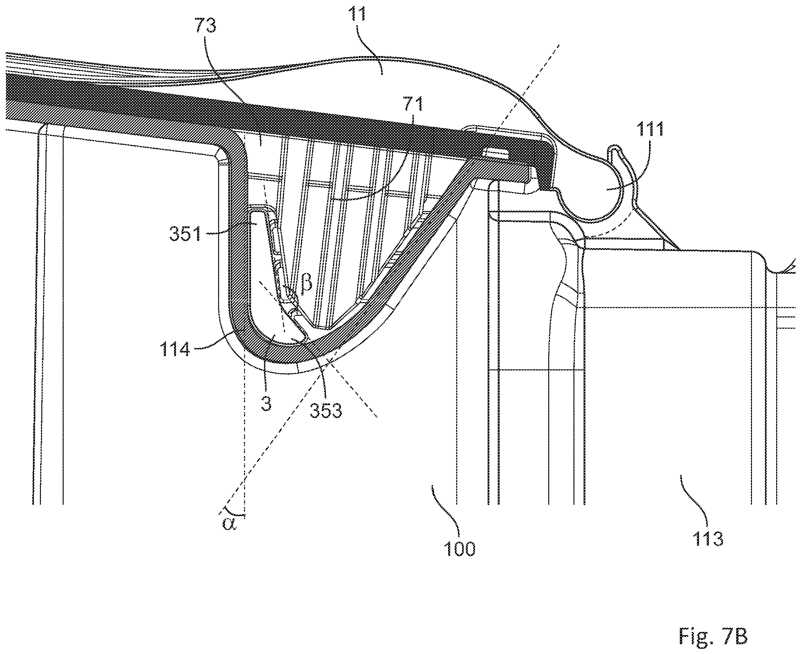

Fig. 7A/B is a close-up view of the pivoting mechanism of the air cleaner as depicted in Fig. 5(a), indicating a plurality of parameters of the present disclosure.

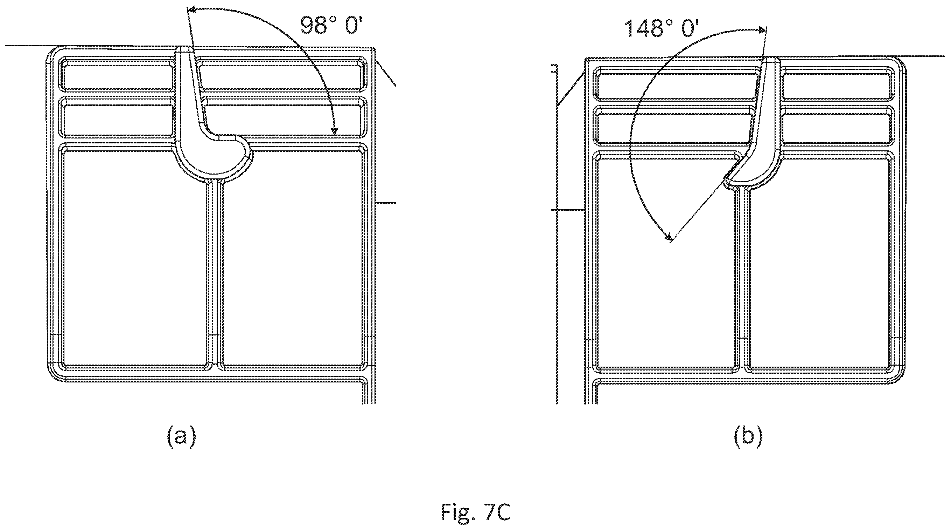

Fig. 7C (a) and (b) illustrate alternative exemplary embodiments of the protrusion.

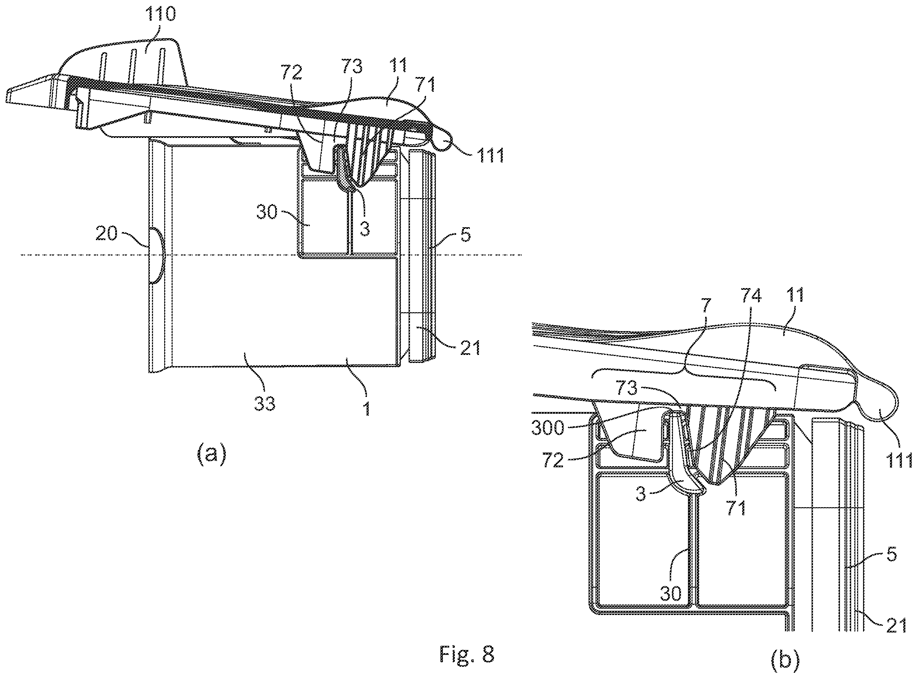

Fig. 8 (a) and (b) provide more detail on the interaction of the housing cover with the filter element at the location of the protrusions in the embodiments associated with Fig. 4.

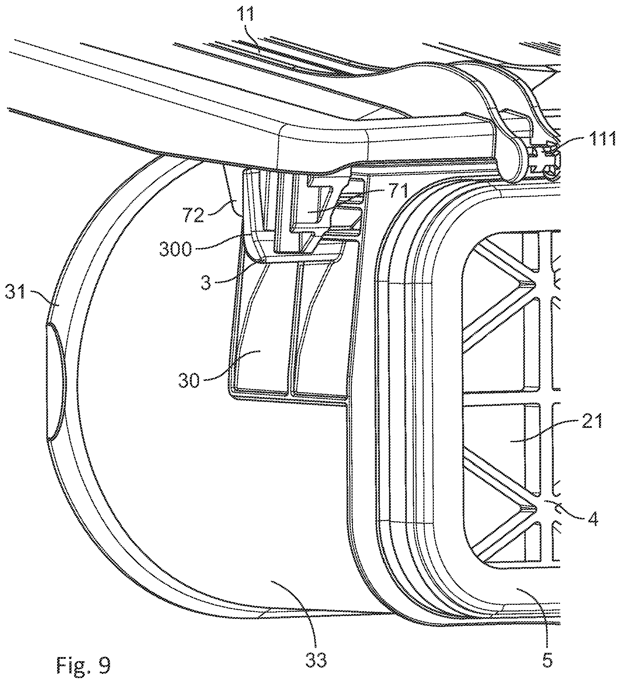

Fig. 9 is a 3D view that also provides more detail on the interaction of the housing cover with the filter element at the location of the protrusions in the embodiments associated with Fig. 4.

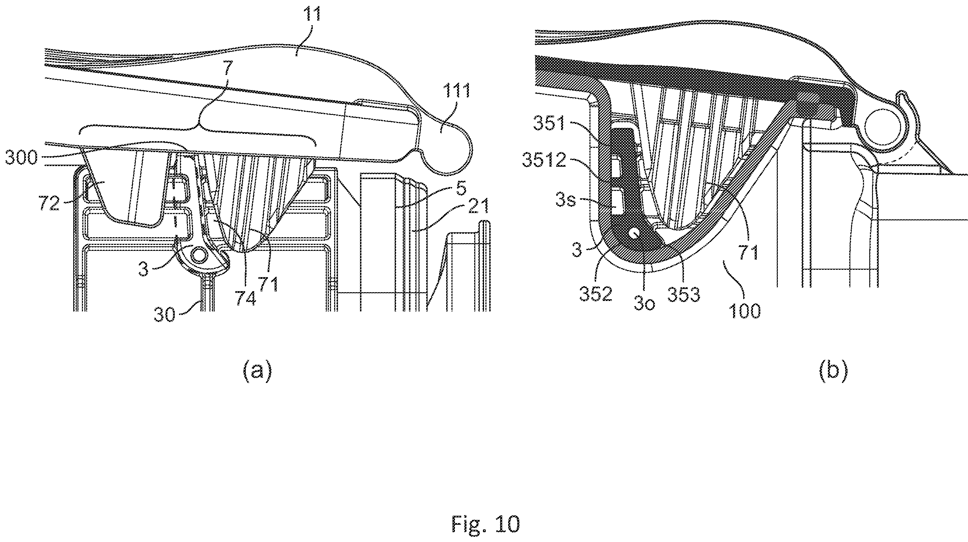

Fig. 10 (a) and (b) illustrate a first alternative embodiment of the generally L-shaped protrusions.

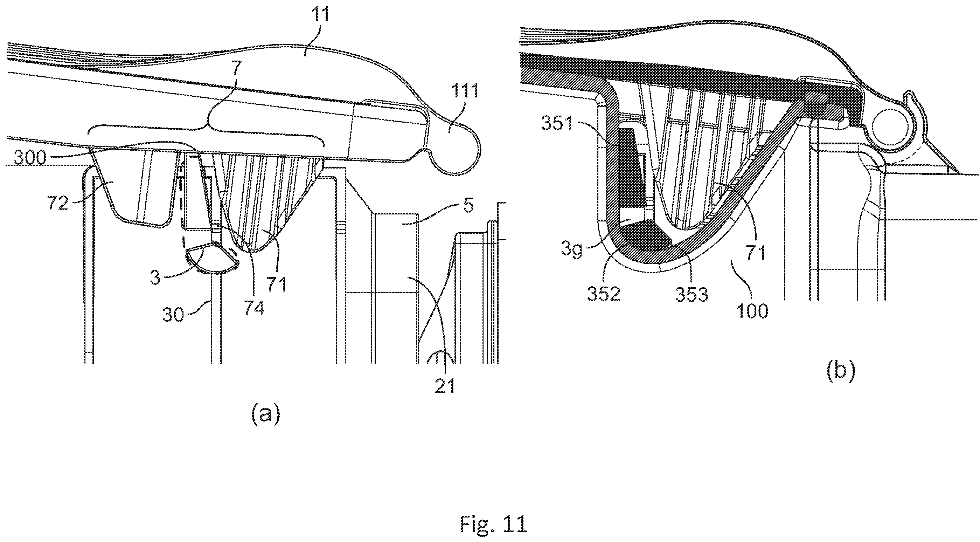

Fig. 11 (a) and (b) illustrate a second alternative embodiment of the generally L-shaped protrusions.

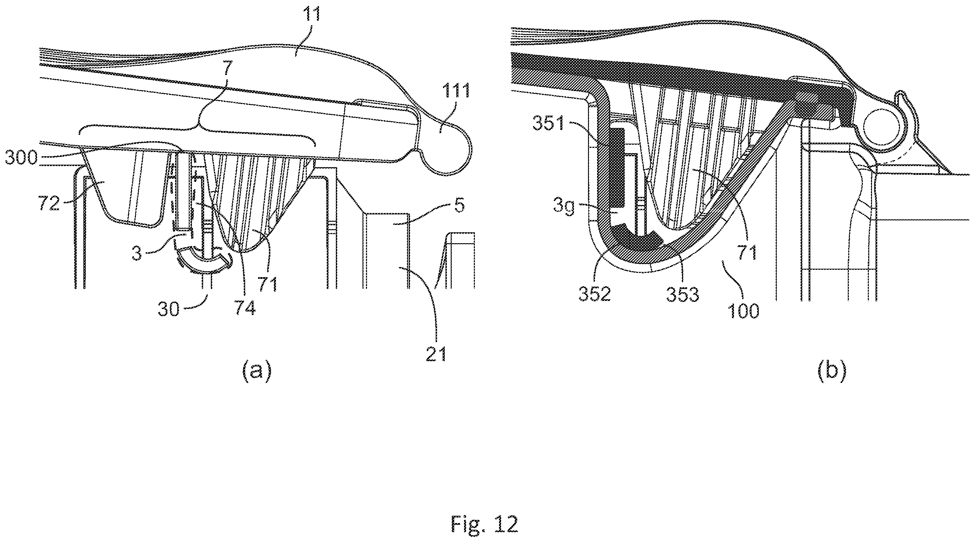

Fig. 12 (a) and (b) illustrate a third alternative embodiment of the generally L-shaped protrusions.

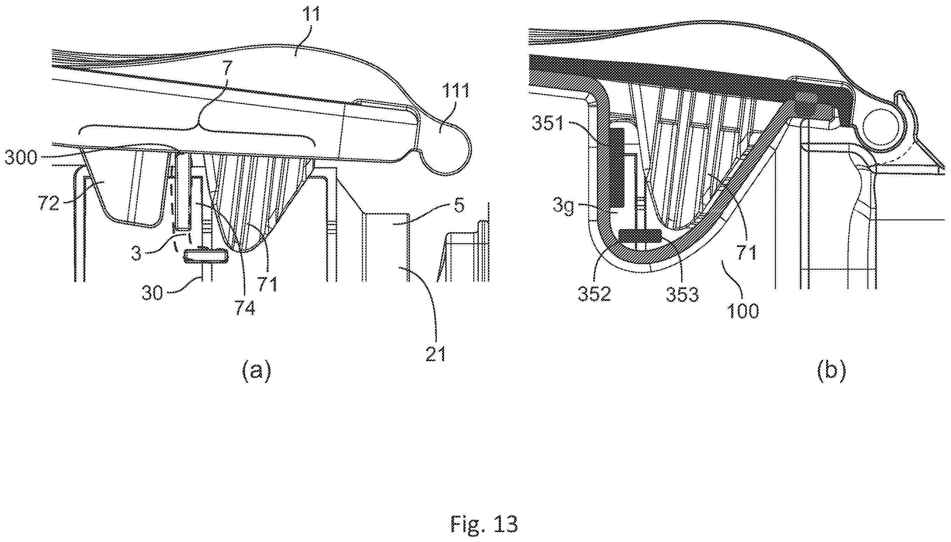

Fig. 13 (a) and (b) illustrate a fourth alternative embodiment of the generally L-shaped protrusions.

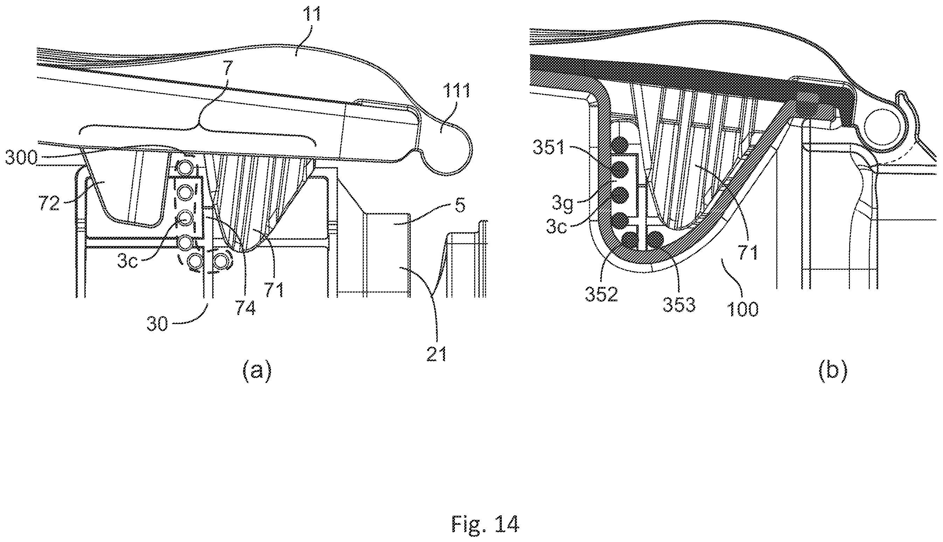

Fig. 14 (a) and (b) illustrate a fifth alternative embodiment of the generally L-shaped protrusions.

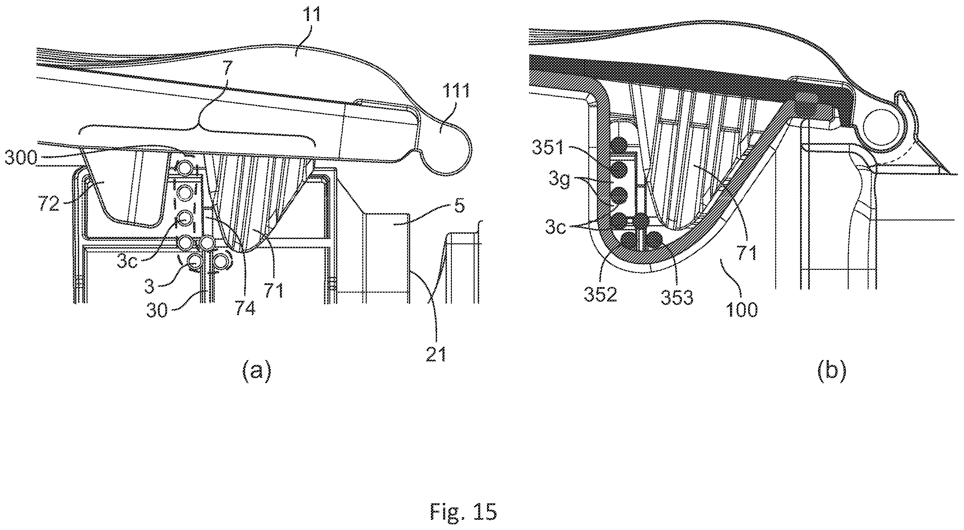

Fig. 15 (a) and (b) illustrate a sixth alternative embodiment of the generally L-shaped protrusions.

### Detailed description of preferred embodiments

The present disclosure will be described with respect to particular embodiments and with reference to certain drawings, but the disclosure is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the disclosure.

Furthermore, the terms first, second, third and the like in the description and in the claims, are used for distinguishing between similar elements and not necessarily for describing a sequential or chronological order.

The various embodiments, although referred to as "preferred" are to be construed as examples in which the disclosure may be implemented rather than as limiting the scope of the disclosure.

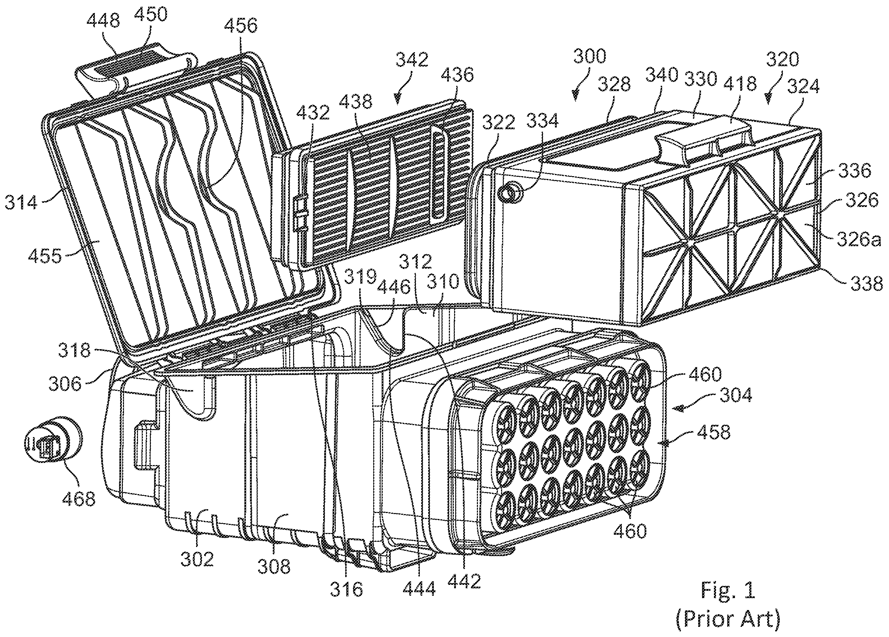

Fig. 1 illustrates an embodiment of a prior art air cleaner and associated filter element disclosed in EP2414071B1, wherein a surrounding housing-wall defines a pair of opposing receiving V-shaped grooves which interact with lugs of a filter element to pivot the element into a final position where a seal of the element is pushed in a sealing position near the outlet of the air cleaner.

The lugs or protrusion of the filter element disclosed in EP2414071B1 are cylindrical. Their robustness can be improved, especially against breaking during installation and during use. Also, the filter element can slightly rotate around the axis defined by the lugs when installed. This degree of freedom is blocked only after having the cover of the air cleaner interact with the handle on the filter element. It was found that a handle is not necessary for a successful installation of the filter element. It will also be appreciated by the skilled person that a typical plurality of deviations in product shape features due to a specific production process, for instance a process of plastic molding, are more easily taken into account in the product design when such features are closer to one another than when these features are more remote.

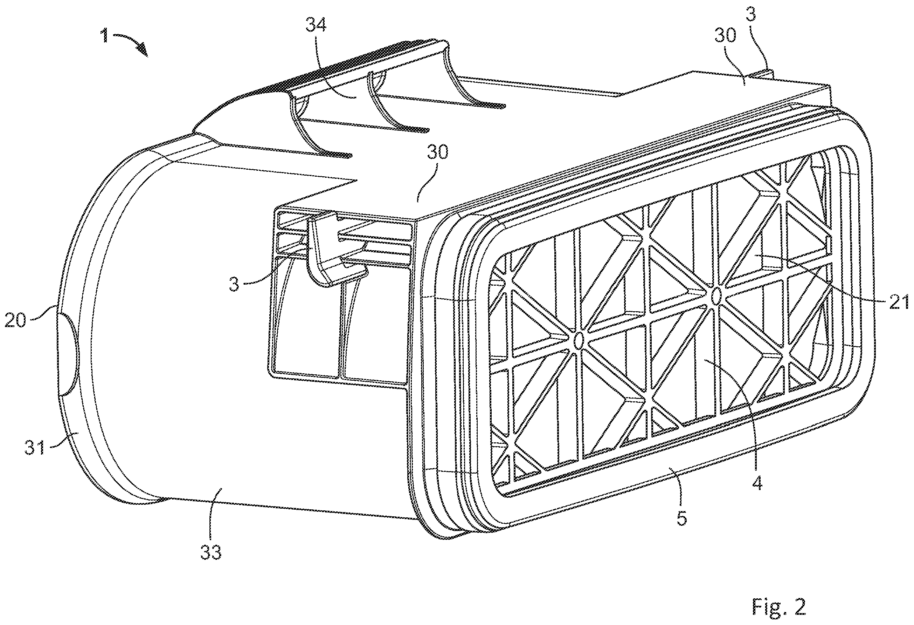

Fig. 2 and 3 (a) to (d) illustrate a filter element according to a preferred embodiment of the present invention. Such a filter element can be installed in a housing/air cleaner illustrated in the assembly according to embodiments of the present invention as illustrated in Fig. 4, Fig. 5 (a) (b) and Fig. 6. Fig. 4 (a) to (f) also illustrate the process for inserting a filter element according to preferred embodiment of the present invention into the air cleaner.

The air cleaner includes a housing 100, an inlet arrangement 112, and an outlet arrangement 113. In this embodiment, the inlet arrangement 112 and the outlet arrangement 113 are at opposite ends of the housing 100. The inlet arrangement preferably comprises a pre-cleaner arrangement.

The housing 100 includes a surrounding housing wall defining an open interior. The housing 100 further defines an access opening 101 in communication with the open interior. In the embodiment shown, the access opening 101 is located between the inlet arrangement 112 and the outlet arrangement 113. When the air cleaner is in a normal, upright operable orientation, the access opening 101 will be at a top part of the air cleaner 100.

A cover 11 is removably secured to the housing 100 over the access opening 101. In this embodiment, the cover 11 is pivotably secured to the housing 100 by a hinge arrangement 111 located adjacent to the outlet arrangement 113. In this manner, the cover 11 is allowed to pivot about the hinge arrangement between a closed position (Fig. 4(f)) and an open position (Fig. 4(a)). When in the open position, the interior may be accessed. The cover preferably comprises a circumferential seal arranged on a surface facing the housing 100 when in a closed state. Further features regarding the cover 11 are discussed below, especially in relation with Fig. 8 (a) (b) and Fig. 9.

The housing-wall defines a pair of opposing receiving grooves 114. Each of the grooves 114 is in open communication with the access opening 101 and is located closer to the outlet arrangement 113 then to the inlet arrangement 112. In FIG. 6, the receiving grooves 114 can be seen in the interior of the housing 100. The receiving grooves have a closed radially outer surface corresponding to a portion of the housing wall. The receiving grooves 113 on opposite sides of the housing are a mirror-image of one another. In Fig. 6, only the exterior of the receiving groove 114 is visible. The receiving grooves, 114 help to orient a filter element 1 into operable orientation and sealing engagement with the housing 100. It can further be noted that the end surfaces 300 of the protrusions 3 are close to or in contact with the inner sidewall of the housing at the locations of the V-shaped groove 114, thereby blocking a movement of the filter element 1 in the housing along the common axis of the protrusions, perpendicular to the housing axis.

The filter element 1 is operably oriented for selective removal within the open interior between the inlet arrangement 112 and the outlet arrangement 113.

As illustrated in detail in for instance in Fig. 7A/B, the grooves 114 are preferably V-shaped grooves 114 and are defined by a first leg 1141 positioned more remotely from the outlet arrangement 113 and a second leg 1143 positioned closer to the outlet arrangement, the legs being connected by a curved connection section 1142.

The first leg of the V-shaped grooves is about perpendicular or perpendicular to an axis of the filter element and/or an axis of the filter housing. The second leg of the V-shaped groove forms an angle α with the first leg of the V-shaped groove of 35°. Preferably, the second leg of the V-shaped groove forms an angle α with the first leg of the V-shaped groove which is the range of 30° to 95°.

The filter element 1 comprises first and second protrusions 3 extending from opposing sides A, A' of the filter element 1 and arranged along a common axis. The protrusions 3 on opposite sides of the housing are preferably a mirror-image of one another, and have a generally L-shaped cross-section, details of which are described later.

The first and second protrusions 3 are adapted and arranged within the receiving grooves 114 such that the filter element 1 can be rocked about a pivot axis defined by pivot points of the first and second protrusions within the housing 100 to rock or pivot the filter element 1 into sealing engagement with the housing 100.

In Fig. 2 and 3 (a) to (d), a preferred embodiment of the filter element or cartridge 1 can be seen, removed from the housing 100. Other embodiments are possible, but this is one usable embodiment that can be used, to advantage. However, it is not a requirement that the filter element have all components or features. The individual features, techniques, and advantages can be selected and be selectively combined for various alternate arrangements.

The filter element 1 includes a media pack 2 having first and second opposite flow faces 20 and 21, e.g., an inlet flow face 20 and outlet flow face 21. The media pack 2 comprises z-media (also known as fluted media), but can also comprise alternative media and media configurations, such as for instance configurations in which pleated media is used to simulate the behavior of fluted media, thereby potentially defining corresponding virtual inlet and outlet faces 20, 21. The inlet and outflow faces 20, 21 of the media pack 2 correspond to, preferably parallel, opposed sides C and C' of the filter element 1.

The filter element and/or media pack have a longitudinal axis extending through opposed sides C and C' and can have radial cross-section perpendicular on the longitudinal axis which is racetrack shaped. Alternatively, it can be rectangular, obround, rectangular with rounder corners or can have any other shape considered suitable to the skilled person.

The filter element also comprises two further pairs of, preferably parallel, opposed sides A, A' (left, right; e.g., relatively short lateral sides) and B, B' (top, bottom; e.g., relatively long lateral sides).

The first and second pair of opposed sides (A, A') and (B, B') generally extend between one another.

The filter element 1 comprises a seal member 5, which forms a releasable seal with a sealing surface in the housing 100. The seal member 5 can be attached in a sealing manner (e.g., permanently or removably attached) to the perimeter of the media pack near the outflow face 21. Adjacent to the outflow face 21 a support grid or frame 4 can be applied to the media pack 2. The support grid 4 is preferably attached in a sealing manner to the outflow face, e.g., by direct bonding, the use of an adhesive/glue or by over-molding of a sealing or other material. The support grid 4 is typically an anti-telescoping feature for wound z-type media and can perform flow guiding. The seal or seal member 5 can be applied to the media pack 2 directly or can be applied at least partially or completely to the support grid 4, e.g., at a periphery thereof, again in a sealing manner. The seal member 5 can be adapted for radial sealing or an axial sealing towards the housing. The seal member can be for instance made of a (e.g., foamed) polyurethane (PU) material and/or a thermoplastic elastomer (TPE) and/or rubber (e.g., O-ring) material, and is preferably compressible. It can be a lip seal member comprising one or more circumferential lips.

The filter element preferably comprises a circumferential shell or protective layer 33 around a periphery of the media pack 2 over at least a portion of an axial length of the media pack 2. For instance, the shell can extend over at least 10% of the axial length of the media pack. It can extend over 10%, 20%, 30%, 40%, 50%, 75%, 90%, 100% of the media pack. It can for instance extend from the outflow face 21 towards the inflow face 20 or from the inflow face 20 towards the outflow face 21, according to any of the above-mentioned extents.

The filter element comprises an optional handle 34 which comprises an opening that is suitable for accommodating one or more fingers of an adult human hand preferably arranged adjacent to the inflow face 20 or side C of the filter element, for instance on one of the lateral side surfaces A or A', or B or B'. The handle 34 can be placed such that its longitudinal direction is perpendicular on the axis of the filter element. The opening is preferably oriented in a direction towards the outflow face of the filter element. The handle 34 is preferably extending from the shell structure and can be unitary with it, for instance when produced by plastic molding.

The shell 33 and support grid 4 can be separate elements or can be made unitary, e.g., in case of production by plastic molding.

Also, at the inflow face 20 or side C of the filter element, a reinforcement structure 31 can be applied, which can be formed unitary with the shell. It can for instance be a circumferential locally thickened portion of the shell. The reinforcement structure 31 may optionally also comprise a grid structure arranged over the inflow face 20 for reinforcement or flow guiding.

The filter element further includes a first and second protrusion 3. When the filter element is operably oriented within the housing 100, each protrusion 3 is positioned in a respective receiving groove 114. Preferably, the protrusions 3 extend form the shell 33. Preferably the protrusions 3 are formed unitary with the shell structure 33, as well as with the support and reinforcement structure 30, explained further on.

The protrusions 3 comprise a generally L-shaped cross-section comprising a first leg 351 (having outer surface 3512, an opposed inner surface 3513, and a top/end surface 300) and a second leg 353 (having an outer surface 3532, an opposed inner surface 3533, and a bottom/end surface 3531) connected by a rounded elbow connection portion 352, the elbow connection portion 352 being arranged and adapted for serving as the pivot point.

According to preferred embodiments, the first leg 351 of the protrusions 3 extends in a direction perpendicular to a longitudinal axis of the filter element 1.

In preferred embodiments, the second leg 353 of the protrusion 3 deviates from the first leg 351 of the protrusion in a direction towards the outlet flow face 21 (or towards outlet arrangement 113 of the housing 100, when installed in the housing). The angle β between the first leg 351 and second leg 353, defined as the angle between inner surfaces 3513 and 3533, is preferably within the range of 30° to 150°. In preferred embodiments it can be for instance 98° or 148°, or about 98° or about 148°. These embodiments are illustrated in Fig. 7C (a) and (b) respectively.

In preferred embodiments, the outer surface 3512 of the first leg 351 rests against the first leg 1141 of the V-shaped groove, when the filter is installed in the housing.

In preferred embodiments, the rounded elbow connection portion 352 rests against the curved connection section 1142 of the V-shaped groove, when the filter is installed in the housing.

In preferred embodiments, the outer surface 3532 of the second leg 353 rests against the second leg 1143 of the V-shaped groove, when the filter is installed in the housing. The shell structure 33 preferably comprises a support and reinforcement structure 30 for each of the protrusions 3, on opposing sides of the filter element 1. These support structures 30 each abut on a virtual planar side surface, from which the respective protrusions 3 extends. For instance, the virtual planar side surface can be parallel or correspond to sides A, A' of the filter element 1.

It is preferred that the protrusions 3 extend towards and that their respective upper ends 300 abut a plane P defined by a planar outer surface of the shell 33. This allows the protrusions to be more easily formed when the shell and protrusions are produced unitary with a plastic (injection) molding technique, which is preferred. It was found to be easier for plastic to flow into protrusion-defining openings in a mold when the openings are adjacent to the bottom of the mold.

Preferably, each support structure 30 abuts and is coplanar with a plane defined by a planar outer surface of the shell or the media pack, such as for instance the surface defined by sides A and A'.

The protrusions 3 preferably have a height H within the range of 2 to 3 cm, and a width W within the range of 1 to 2 cm. It is an advantage that the described protrusions of the L-shape type are relatively stronger than state of the art cylindrical protrusions comprising a similar material volume, e.g., plastic volume.

When referring to this type of protrusions 3, the air cleaner and protrusions are adapted preferably such that the curved connection portion 352 and/or second leg of the protrusions 3 is/are in contact with the curved connection section 1142 and/or with the second leg 1143 of the V-shaped grooves 114.

The air cleaner comprises a cover 11 which is removably mounted in a pivotable manner around a pivot axis adjacent to the access opening 101. The cover 11 comprises a pivoting structure 111 at a first end.

It further comprises a locking structure 7 being arranged and adapted to block a movement of the filter element 1 in the air cleaner 100 in a direction towards the outlet arrangement 113 of the housing 100 and/or in a direction along the insertion/removal direction of the filter element 1 for the housing 100, and to block a rotation of the element 1 around its pivot point in a second rotation direction, the second rotation direction be opposite to the first rotation direction. The locking structure preferably projects from a lower surface of the cover 11 into the interior volume of the filter housing 100 when in a closed state.

The locking structure 7 can comprise two parts which form a mirror image of one another. A first part can be arranged at a first side of the cover 11, e.g., at a position adjacent to side A of the filter element 1 when the cover 11 is closed. A second part can be arranged at an opposed second side of the cover 11, e.g., at a position adjacent to side A' of the filter element when the cover 11 is closed. Each of the parts are adapted and arranged to interact with respective protrusions 3.

Fig. 8 (a) and (b) illustrate details of a preferred locking structure 7. Only one of the two parts of the locking structure has been depicted (the other part being a mirror copy and being positioned in a symmetric manner at an opposed side of the cover).

Each part can comprise a rib or fin 71, which is arranged for being received in the V-shaped grooves 114 in between the protrusions 3 and the second leg 1143 of the V-shaped groove 114. The rib 71 is preferably positioned in parallel with the longitudinal axes of filter element 1 and housing 100. The rib 71 is preferably complementary to the respective protrusion 3 with respect to the V-shaped grooves 114, for maximal strength and fixation. Preferably, the rib 71 rests in the V-shaped groove 114 against the inner surfaces 3513 and 3533 of the L-shaped protrusion 3, and against the second leg 1143 of the V-shaped groove 114.

Preferably, the locking structure comprises a second portion, a second rib or fin, 72 which is adapted for locking the position of the filter element 1 along the axis of the filter element 1 and/or the housing 100, and which is not received by the V-shaped groove 114, thereby blocking a movement of the filter element 1 in a direction towards the inlet arrangement and blocking a rotation of the element 1 around its pivot points in the first rotation direction. When closing the cover 11, the second portion 72 enters the space in between the filter element 1 and the housing inner sidewall.

The first rib 71 and second rib 72 of the first part are preferably arranged adjacent to one another along a first straight line which is parallel to the housing and/or filter axis. The same applies for the first rib 71 and second rib 72 of the second part, which are preferably arranged along a second straight line. Both arrangements or straight lines are preferably parallel to each other and to the housing and/or filter axes. The first rib 71 is preferably thinner than the second rib 72.

The side surfaces of the ribs or fins 71 and 72 (and optionally bridge portion 73; see below) on one side of the cover 11 are preferably parallel.

Preferably, the locking structure 7 comprises two cover slots 74 (one on each opposed side of the cover 11) for receiving the respective protrusions 3. The cover slots 74 can be defined by the first portion 71, second portion 72 and a connecting rib or bridge portion 73 arranged in between the first portion 71 and the second portion 72. The rib portion 73 than has a reinforcing function for the combined structure (71-72-73), and in a certain view extends into the interior of the housing 100 to a lesser extent. The bridge portion 73 is preferably aligned with the first and second portions 71, 72. The bridge portion 73 and first and second portions 71 and 72 are preferably formed unitary, preferably formed unitary with the rest of the cover 11.

The cover 11 can further be adapted and arranged for an additional locking of the filter element 1 in a fixed position with respect to the housing 100 when closed and can comprise a contact surface for contacting the handle 34 of the filter element 1 in order to provide such additional position fixation of the filter element 1 in the housing 100. The cover can also comprise a handle 110, preferable at the opposed side of the pivoting structure 111.

The air cleaner can further also comprise an optional safety filter element (not illustrated). The safety filter element is then removably sealed between the filter element 1 and the outlet arrangement 113. The safety filter element may for instance be of the planar type and may for instance comprise a media pack of pleated filtration media, which can be circumscribed by a frame, e.g., having a rectangular, obround, racetrack, rectangular with rounder corners or other shape, defining the type of outer shape of the safety element. It may include a seal member arranged around a perimeter of the frame to form a seal with the housing wall of the housing 100. The safety filter element can be constructed and arranged to be pivotably mounted within the air cleaner housing 100 and it can comprise a pivot member, as for instance described in EP2414071B1.

Fig. 5 (b) illustrates the air cleaner 100 in operation. Air to be filtered, such as air being drawn into an engine enters the air cleaner from the inlet arrangement 112. The air goes through the inlet arrangement, which in this embodiment, functions as a pre-cleaner. This pre-cleaner can for instance comprise swirl tubes which are adapted for separation of dust and relatively large particles from the incoming air flow by introducing a swirl in the flow.

The air then flows from the inlet arrangement 112, through the inlet flow face 20 of media pack 2 of the filter element 1, then through the z-media 2, and then exits from the outlet flow face 21 of the media pack 2 and filter element 1.

From there, the air may flow through the optional safety element and then through the outlet arrangement 113, leaving the air cleaner 100.

From there, the filtered air is used for downstream equipment, such as for instance an engine on a vehicle, such as for instance a tractor.

Fig. 4 (a) to (d) illustrate the installation process of a new filter element into an air cleaner according to preferred embodiments.

Fig. 4(a) illustrates an empty housing 100 having the access opening 101 accessible by a filter element 1, which approaches the filter housing 100 under a tilted angle. For instance, the length of the access opening in the longitudinal direction of the housing may be smaller than the length of the filter element 1 in the corresponding direction. The element is inserted into the interior of the filter housing 100, first under a tilted angle, such that the protrusions 3 are received by the respective V-shaped grooves 114 (Fig. 4(b)). A pivoting movement is then applied by pushing the element 1 downwards at a still exposed portion of the filter element 1, for instance in the area of the handle 34, if present. The seal, e.g., radial seal 5 of the element is thereby pushed towards the outlet arrangement 113, sealing against the inner wall of the housing 100 close to the outlet arrangement 113 (Fig 4 (c)). Now the cover 11 can be pivoted towards and until it reaches a closed state of the cover onto the housing (Fig. 4 (d) to (f)). Latches may for instance also be provided on the cover to keep the cover in a closed state by catching a catch surface on the housing 100.

Fig. 10 to Fig. 15 illustrate alternative embodiments of the generally L-shaped protrusions 3, which can be used in combination with the cover/locking structure and filter housing in the same way as described in relation to Fig.1 to Fig.9. In the (a) components of the respective figures, the generally L-shaped character has been emphasised by respective dotted line contours. Fig. 10 (a) and (b) illustrate a first alternative embodiment of the generally L-shaped protrusions 3, which is similar to the embodiments described in relation to Figures 2 to 9 but differs in that the protrusions 3 comprise one or more internal openings 3o or lateral recesses 3s. In the example shown, each of the protrusions 3 comprises a single internal opening 3o in the elbow connection portion 352 and two lateral recesses 3s in the outer surface 3512 of the a first leg 351. The two lateral recesses 3s have their opening oriented in a direction of the inlet flow face 20 of the filter element 1. Each of the recesses 3s can have an axis that is parallel to the axis of the filter element 1. It is an advantage of this embodiment that less material is needed for the protrusions, while obtaining the previously described effects and advantages.

Fig. 11 (a) and (b) illustrate a second alternative embodiment of the generally L-shaped protrusions 3, which is similar to the embodiments described in relation to Figures 2 to 9, but differs in that the protrusions 3 comprise at least one interruption or gap 3g. In another view, the generally L-shaped protrusions 3 each comprise two separate portions, separated by a gap 3g. The gap can be for instance present in the portion of the first leg 351 which is adjacent to the elbow portion 352. The two separate portions correspond to a first leg portion 351 on one side and the combination of the elbow portion 352 and second leg portion 353 on the other side.

Fig. 12 (a) and (b) illustrate a third alternative embodiment of the generally L-shaped protrusions 3, which is similar to the embodiments described in relation to Fig. 11(a) and (b). It also comprises an interruption or gap 3g at a similar location. The two separate portions are portions with constant thickness. A first portion corresponding to the first leg 351 is straight, while a second portion corresponding to the elbow portion 352 and the second leg 353 is curved, e.g. it follows an arc of a circle.

Fig. 13 (a) and (b) illustrate a fourth alternative embodiment of the generally L-shaped protrusions 3, which is similar to the embodiments described in relation to Fig. 12(a) and (b), but wherein the second portion is also straight. Preferably the second portion is positioned perpendicular to the first portion.

Fig. 14 (a) and (b) illustrate a fifth alternative embodiment of the generally L-shaped protrusions, which is similar to the embodiments described in relation to Figures 2 to 9 but differs in that the protrusions 3 are defined by a plurality of independent or disconnected portions 3c, each of the disconnected portions corresponding to a cylindrical protrusion, and the plurality of disconnect portions being arranged in a general L-shape. Between neighbouring disconnected portions, respective gaps 3g are present.

Fig. 15 (a) and (b) illustrate a sixth alternative embodiment of the generally L-shaped protrusions, which is similar to the embodiments described in relation to Fig. 14(a) and 14(b), but which comprises a different configuration of protrusions.

## Claims

1. An air cleaner comprising:
a) a housing (100) comprising:
i. a surrounding housing-wall defining an open interior;
ii. an inlet arrangement (112);
iii. an outlet arrangement (113); and
iv. the inlet arrangement (112) and outlet arrangement (113) being at opposite ends of the housing (100); the housing defining an access opening (101) in communication with the open interior;
b) a cover (11) removably secured to the housing over the access opening (101);
c) a filter element (1) being operably oriented for selective removal within the open interior between the inlet arrangement (112) and outlet arrangement (113); the filter element (1) comprising:
i. a media pack (2), preferably having opposite inlet and outlet flow faces (20, 21); and
ii. a seal member (5) attached in a sealing manner to the media pack (2); the seal member (5) forming a releasable seal with a sealing surface in the housing (100);
wherein the surrounding housing-wall defines a pair of opposing receiving V-shaped grooves (114), each of the grooves (114) being in open communication with the access opening (101) and being located closer to the outlet arrangement (113) than the inlet arrangement (112); wherein said V-shaped grooves (114) are defined by a first leg (1141) positioned more remotely from said outlet arrangement (113) and a second leg (1143) positioned closer to said outlet arrangement (113), said legs (1141, 1143) being connected by a curved connection section (1142); and
wherein said filter element (1) comprises first and second protrusions (3) extending from opposing sides of said filter element (1) and arranged along a common axis; the first and second protrusions (3) being adapted and arranged within the receiving grooves (114) such that the filter element (1) can be rocked about a pivot axis defined by pivot points of the first and second protrusions (3) within the housing to rock or pivot the filter element (1) into sealing engagement with the housing (100); and
wherein said protrusions (3) comprise a generally L-shaped cross-section comprising a first leg (351) and a second leg (353), connected by an elbow connection portion (352), said elbow connection portion (352) being arranged and adapted to serve as said pivot point for said filter element (1) in said housing (100).

2. The air cleaner of claim 1, wherein said first leg (351) of said protrusions is in contact with said first leg (1141) of said V-shaped grooves, thereby blocking a movement of the filter element (1) in a direction towards the inlet arrangement (112) and blocking a rotation of the element (1) around its pivot points in a first rotation direction.

3. The air cleaner of claim 2, wherein said first leg of said V-shaped grooves (114) is about perpendicular or perpendicular to an axis of said filter element (1) and/or an axis of said filter housing (100).

4. The air cleaner of any of the previous claims, wherein said second leg (353) of said protrusions (3) is in contact with said curved connection section (1142) and/or with said second leg (1143) of said V-shaped grooves (114).

5. An air cleaner according to any of the previous claims, wherein said cover (11) comprises a locking structure (7 ) being arranged and adapted to block a movement of the protrusions (3) and thus filter element (1) in a direction towards the outlet arrangement (113) and/or in a direction along the insertion/removal direction of the filter element (1), and to block a rotation of the element (1) around its pivot point in a second rotation direction.

6. An air cleaner according to claim 5, wherein said locking structure (7) comprises cover slots (74) for receiving said protrusions (3).

7. An air cleaner according to any of claims 5 to 6, wherein said locking structure (7) comprises a first portion (71) which is adapted and arranged for being received in said V-shaped grooves (114) in between said protrusions (3) and said second leg (1143) of said V-shaped groove (114).

8. An air cleaner according to claim 7, wherein said first portion is complementary to said protrusion (3) with respect to the V-shaped grooves (114).

9. An air cleaner according to any of claims 5 to 8, wherein said locking structure (7) comprises a second portion (72) which is adapted for locking the position of the filter element (1) along the axis of said filter element (1) and/or said housing (100), and which is not received by said V-shaped groove (114), thereby blocking a movement of the filter element (1) in a direction towards the inlet arrangement (112) and blocking a rotation of the element (1) around its pivot points in said first rotation direction.

10. A filter element (1), comprising:
i. a media pack (2), preferably having opposite inlet and outlet flow faces (20, 21);
ii. a circumferential seal member (5) attached in a sealing manner to a periphery of said media pack (2); the seal member (5) adapted for forming a releasable seal with a sealing surface in a housing (100); and
iii. wherein said filter element (1) comprises first and second protrusions (3) extending from opposing sides of said filter element (1) and arranged along a common axis; the first and second protrusions (3) being adapted and arranged such as to define a pivot axis defined by pivot points of the first and second protrusions (3); and
wherein said protrusions (3) comprise a generally L-shaped cross-section comprising a first leg (351) and a second leg (353), connected by an elbow connection portion (352), said elbow connection portion (352) being arranged and adapted for serving as said pivot point.

11. A filter element according to claim 10, wherein said first leg (351) of said protrusions extends in a direction perpendicular to a longitudinal axis of said filter element (1).

12. A filter element according to claim 10 or 11, wherein said second leg (353) of said protrusion (3) extends in a direction which forms an angle with said direction of said first leg (351) of said protrusion (3) which is within the range of 30° to 150°.

13. A filter element according to claim 12, comprising a shell structure (33) around a periphery of said media pack (2) over at least a portion of an axial length of said media pack (2), said shell structure (33) comprising a support and reinforcement structure (30) for each of said protrusions (3), said support structures (30) each abutting on a virtual planar side surface, from which said protrusions (3) extend.

14. A filter element according to any of claims 10 to 13, wherein said protrusions (3) extend towards and abut a plane defined by a planar outer surface of said shell (33) or said media pack (2).

15. A filter element according to any of claims 10 to 14, wherein said protrusions (3) comprising a generally L-shaped cross-section comprise a set of individual structures which are not connected and/or comprise one or more lateral recesses or slots, and/or internal openings, and/or gaps.

## Patentansprüche

1. Luftreiniger, umfassend:
a) ein Gehäuse (100), umfassend:
i. eine umgebende Gehäusewand, die einen offenen Innenraum definiert;
ii. eine Einlassanordnung (112);
iii. eine Auslassanordnung (113); und
iv. wobei die Einlassanordnung (112) und die Auslassanordnung (113) an entgegengesetzten Enden des Gehäuses (100) angeordnet sind; wobei das Gehäuse eine Zugangsöffnung (101) definiert, die mit dem offenen Innenraum in Verbindung steht;
b) eine Abdeckung (11), die an dem Gehäuse über der Zugangsöffnung (101) entfernbar befestigt ist;
c) ein Filterelement (1), das innerhalb des offenen Innenraums zwischen der Einlassanordnung (112) und der Auslassanordnung (113) betriebsmäßig zur selektiven Entnahme ausgerichtet ist; wobei das Filterelement (1) umfasst:
i. ein Medienpaket (2), das vorzugsweise entgegengesetzte Einlass- und Auslassströmungsflächen (20, 21) aufweist; und
ii. ein Dichtungsglied (5), das in einer abdichtenden Weise an dem Medienpaket (2) befestigt ist; wobei das Dichtungsglied (5) eine lösbare Dichtung mit einer Dichtoberfläche in dem Gehäuse (100) bildet;
wobei die umgebende Gehäusewand ein Paar entgegengesetzter V-förmiger Aufnahmenuten (114) definiert, wobei jede der Nuten (114) in offener Verbindung mit der Zugangsöffnung (101) steht und näher der Auslassanordnung (113) als der Einlassanordnung (112) angeordnet ist; wobei die V-förmigen Nuten (114) durch einen ersten Schenkel (1141), der weiter von der Auslassanordnung (113) entfernt angeordnet ist, und einen zweiten Schenkel (1143), der näher bei der Auslassanordnung (113) angeordnet ist, definiert sind, wobei die Schenkel (1141, 1143) durch einen gekrümmten Verbindungsabschnitt (1142) verbunden sind; und
wobei das Filterelement (1) einen ersten und einen zweiten Vorsprung (3) umfasst, die sich von entgegengesetzten Seiten des Filterelements (1) erstrecken und entlang einer gemeinsamen Achse angeordnet sind; wobei der erste und der zweite Vorsprung (3) derart innerhalb der Aufnahmenuten (114) ausgebildet und angeordnet sind, dass das Filterelement (1) um eine Schwenkachse, die durch Schwenkpunkte des ersten und des zweiten Vorsprungs (3) definiert ist, innerhalb des Gehäuses verkippt werden kann, um das Filterelement (1) in dichtenden Eingriff mit dem Gehäuse (100) zu verkippen oder zu schwenken; und
wobei die Vorsprünge (3) einen im Allgemeinen L-förmigen Querschnitt umfassen, der einen ersten Schenkel (351) und einen zweiten Schenkel (353) umfasst, welche durch einen ellbogenförmigen Verbindungsabschnitt (352) verbunden sind, wobei der ellbogenförmige Verbindungsabschnitt (352) angeordnet und ausgebildet ist, um als der Schwenkpunkt für das Filterelement (1) in dem Gehäuse (100) zu dienen.

2. Luftreiniger nach Anspruch 1, wobei der erste Schenkel (351) der Vorsprünge mit dem ersten Schenkel (1141) der V-förmigen Nuten in Kontakt steht und dadurch eine Bewegung des Filterelements (1) in einer Richtung hin zu der Einlassanordnung (112) blockiert und eine Drehung des Elements (1) um seine Schwenkpunkte in einer ersten Drehrichtung blockiert.

3. Luftreiniger nach Anspruch 2, wobei der erste Schenkel der V-förmigen Nuten (114) ungefähr im rechten Winkel oder im rechten Winkel zu einer Achse des Filterelements (1) und/oder einer Achse des Filtergehäuses (100) verläuft.

4. Luftreiniger nach einem beliebigen der vorhergehenden Ansprüche, wobei der zweite Schenkel (353) der Vorsprünge (3) mit dem gekrümmten Verbindungsabschnitt (1142) und/oder mit dem zweiten Schenkel (1143) der V-förmigen Nuten (114) in Kontakt steht.

5. Luftreiniger nach einem beliebigen der vorhergehenden Ansprüche, wobei die Abdeckung (11) eine Verriegelungsstruktur (7) umfasst, die angeordnet und ausgebildet ist, um eine Bewegung der Vorsprünge (3) und somit des Filterelements (1) in einer Richtung hin zu der Auslassanordnung (113) und/oder in einer Richtung entlang der Einsetz-/Entnahmerichtung des Filterelements (1) zu blockieren und eine Drehung des Elements (1) um seinen Schwenkpunkt in einer zweiten Drehrichtung zu blockieren.

6. Luftreiniger nach Anspruch 5, wobei die Verriegelungsstruktur (7) Abdeckungsschlitze (74) zum Aufnehmen der Vorsprünge (3) umfasst.

7. Luftreiniger nach einem beliebigen der Ansprüche 5 bis 6, wobei die Verriegelungsstruktur (7) einen ersten Abschnitt (71) umfasst, der ausgebildet und angeordnet ist, um in den V-förmigen Nuten (114) zwischen den Vorsprüngen (3) und dem zweiten Schenkel (1143) der V-förmigen Nut (114) aufgenommen zu werden.

8. Luftreiniger nach Anspruch 7, wobei der erste Abschnitt bezüglich der V-förmigen Nuten (114) komplementär zu dem Vorsprung (3) ist.

9. Luftreiniger nach einem beliebigen der Ansprüche 5 bis 8, wobei die Verriegelungsstruktur (7) einen zweiten Abschnitt (72) umfasst, der zum Verriegeln der Position des Filterelements (1) entlang der Achse des Filterelements (1) und/oder des Gehäuses (100) ausgebildet ist und der nicht von der V-förmigen Nut (114) aufgenommen wird und dadurch eine Bewegung des Filterelements (1) in einer Richtung hin zu der Einlassanordnung (112) blockiert und eine Drehung des Elements (1) um seine Schwenkpunkte in der ersten Drehrichtung blockiert.

10. Filterelement (1), umfassend:
i. ein Medienpaket (2), das vorzugsweise entgegengesetzte Einlass- und Auslassströmungsflächen (20, 21) aufweist;
ii. ein Umfangsdichtungsglied (5), das in abdichtender Weise an einem Umfang des Medienpakets (2) befestigt ist; wobei das Dichtungsglied (5) zum Bilden einer lösbaren Dichtung mit einer Dichtoberfläche in einem Gehäuse (100) ausgebildet ist; und
iii. wobei das Filterelement (1) einen ersten und einen zweiten Vorsprung (3) umfasst, die sich von gegenüberliegenden Seiten des Filterelements (1) erstrecken und entlang einer gemeinsamen Achse angeordnet sind; wobei der erste und der zweite Vorsprung (3) derart ausgebildet und angeordnet sind, dass sie eine Schwenkachse definieren, die durch Schwenkpunkte des ersten und des zweiten Vorsprungs (3) definiert ist; und
wobei die Vorsprünge (3) einen im Allgemeinen L-förmigen Querschnitt umfassen, der einen ersten Schenkel (351) und einen zweiten Schenkel (353) umfasst, welche durch einen ellbogenförmigen Verbindungsabschnitt (352) verbunden sind, wobei der ellbogenförmige Verbindungsabschnitt (352) angeordnet und ausgebildet ist, um als der Schwenkpunkt zu dienen.

11. Filterelement nach Anspruch 10, wobei sich der erste Schenkel (351) der Vorsprünge in einer im rechten Winkel zu einer Längsachse des Filterelements (1) verlaufenden Richtung erstreckt.

12. Filterelement nach Anspruch 10 oder 11, wobei sich der zweite Schenkel (353) des Vorsprungs (3) in einer Richtung erstreckt, die mit der Richtung des ersten Schenkels (351) des Vorsprungs (3) einen Winkel im Bereich von 30° bis 150° bildet.

13. Filterelement nach Anspruch 12, umfassend eine Mantelstruktur (33) um einen Umfang des Medienpakets (2) herum über mindestens einen Abschnitt einer axialen Länge des Medienpakets (2), wobei die Mantelstruktur (33) eine Trag- und Verstärkungsstruktur (30) für jeden der Vorsprünge (3) umfasst, wobei die Tragstrukturen (30) jeweils an einer virtuellen planaren Seitenoberfläche anliegen, von der sich die Vorsprünge (3) erstrecken.

14. Filterelement nach einem beliebigen der Ansprüche 10 bis 13, wobei sich die Vorsprünge (3) hin zu einer Ebene, welche durch eine planare äußere Oberfläche des Mantels (33) oder des Medienpakets (2) gebildet wird, erstrecken und an dieser anliegen.

15. Filterelement nach einem beliebigen der Ansprüche 10 bis 14, wobei die Vorsprünge (3), die einen im Allgemeinen L-förmigen Querschnitt umfassen, einen Satz von einzelnen Strukturen, die nicht verbunden sind, umfassen und/oder eine(n) oder mehrere seitliche Ausnehmungen oder Schlitze und/oder innere Öffnungen und/oder Zwischenräume umfassen.

## Revendications

1. Épurateur d'air comprenant :
a) un logement (100) comprenant :
i. une paroi de logement environnante définissant un intérieur ouvert ;
ii. un agencement d'entrée (112) ;
iii. un agencement de sortie (113) ; et
iv. l'agencement d'entrée (112) et l'agencement de sortie (113) étant situés au niveau d'extrémités opposées du logement (100) ; le logement définissant une ouverture d'accès (101) en communication avec l'intérieur ouvert ;
b) un couvercle (11) fixé de manière amovible au logement au-dessus de l'ouverture d'accès (101) ;
c) un élément filtrant (1) étant orienté de manière opérationnelle pour un retrait sélectif à l'intérieur de l'intérieur ouvert entre l'agencement d'entrée (112) et l'agencement de sortie (113) ; l'élément filtrant (1) comprenant :
i. un ensemble de milieux filtrants (2), ayant de préférence des faces d'écoulement d'entrée et de sortie opposées (20, 21) ; et
ii. un organe d'étanchéité (5) fixé de manière étanche à l'ensemble de milieux filtrants (2) ; l'organe d'étanchéité (5) formant un joint pouvant être amovible avec une surface d'étanchéité dans le logement (100) ;
dans lequel la paroi de logement environnante définit une paire de rainures de réception opposées en forme de V (114), chacune des rainures (114) étant en communication ouverte avec l'ouverture d'accès (101) et étant située plus près de l'agencement de sortie (113) que de l'agencement d'entrée (112) ; dans lequel lesdites rainures en forme de V (114) sont définies par une première branche (1141) positionnée plus à distance dudit agencement de sortie (113) et par une seconde branche (1143) positionnée plus près dudit agencement de sortie (113), lesdites branches (1141, 1143) étant reliées par une section de raccordement incurvée (1142) ; et
dans lequel ledit élément filtrant (1) comprend des première et seconde protubérances (3) s'étendant depuis des côtés opposés dudit élément filtrant (1) et agencées le long d'un axe commun ; les première et seconde protubérances (3) étant conçues et agencées à l'intérieur des rainures de réception (114) de telle sorte que l'élément filtrant (1) peut être basculé autour d'un axe de pivotement défini par des points de pivotement des première et seconde protubérances (3) à l'intérieur du logement pour basculer ou pivoter l'élément filtrant (1) en engagement d'étanchéité avec le logement (100) ; et
dans lequel lesdites protubérances (3) comprennent une section transversale globalement en forme de L comprenant une première branche (351) et une seconde branche (353), reliées par une portion de raccordement en coude (352), ladite portion de raccordement en coude (352) étant agencée et conçue pour servir de point de pivotement pour ledit élément filtrant (1) dans ledit logement (100).

2. Épurateur d'air selon la revendication 1, dans lequel ladite première branche (351) desdites protubérances est en contact avec ladite première branche (1141) desdites rainures en forme de V, bloquant de ce fait un mouvement de l'élément filtrant (1) dans un sens vers l'agencement d'entrée (112) et bloquant une rotation de l'élément (1) autour de ses points de pivotement dans un premier sens de rotation.

3. Épurateur d'air selon la revendication 2, dans lequel ladite première branche desdites rainures en forme de V (114) est approximativement perpendiculaire ou perpendiculaire à un axe dudit élément filtrant (1) et/ou à un axe dudit logement de filtre (100).

4. Épurateur d'air selon l'une quelconque des revendications précédentes, dans lequel ladite seconde branche (353) desdites protubérances (3) est en contact avec ladite section de raccordement incurvée (1142) et/ou avec ladite seconde branche (1143) desdites rainures en forme de V (114).

5. Épurateur d'air selon l'une quelconque des revendications précédentes, dans lequel ledit couvercle (11) comprend une structure de verrouillage (7) étant agencée et conçue pour bloquer un mouvement des protubérances (3) et donc de l'élément filtrant (1) dans un sens vers l'agencement de sortie (113) et/ou dans un sens le long de la direction d'insertion/retrait de l'élément filtrant (1), et pour bloquer une rotation de l'élément (1) autour de son point de pivotement dans un second sens de rotation.

6. Épurateur d'air selon la revendication 5, dans lequel ladite structure de verrouillage (7) comprend des fentes de couvercle (74) pour recevoir lesdites protubérances (3).

7. Épurateur d'air selon l'une quelconque des revendications 5 à 6, dans lequel ladite structure de verrouillage (7) comprend une première portion (71) qui est conçue et agencée pour être reçue dans lesdites rainures en forme de V (114) entre lesdites protubérances (3) et ladite seconde branche (1143) de ladite rainure en forme de V (114).

8. Épurateur d'air selon la revendication 7, dans lequel ladite première portion est complémentaire à ladite protubérance (3) par rapport aux rainures en forme de V (114).

9. Épurateur d'air selon l'une quelconque des revendications 5 à 8, dans lequel ladite structure de verrouillage (7) comprend une seconde portion (72) qui est conçue pour verrouiller la position de l'élément filtrant (1) le long de l'axe dudit élément filtrant (1) et/ou dudit logement (100), et qui n'est pas reçue par ladite rainure en forme de V (114), bloquant de ce fait un mouvement de l'élément filtrant (1) dans un sens vers l'agencement d'entrée (112) et bloquant une rotation de l'élément (1) autour de ses points de pivotement dans ledit premier sens de rotation.

10. Élément filtrant (1), comprenant :
i. un ensemble de milieux filtrants (2), ayant de préférence des faces d'écoulement d'entrée et de sortie opposées (20, 21) ;
ii. un organe d'étanchéité circonférentiel (5) fixé de manière étanche à une périphérie dudit ensemble de milieux filtrants (2) ; l'organe d'étanchéité (5) étant conçu pour former un joint pouvant être amovible avec une surface d'étanchéité dans un logement (100) ; et
iii. dans lequel ledit élément filtrant (1) comprend des première et seconde protubérances (3) s'étendant depuis des côtés opposés dudit élément filtrant (1) et agencées le long d'un axe commun ; les première et seconde protubérances (3) étant conçues et agencées de manière à définir un axe de pivotement défini par des points de pivotement des première et seconde protubérances (3) ; et
dans lequel lesdites protubérances (3) comprennent une section transversale globalement en forme de L comprenant une première branche (351) et une seconde branche (353), reliées par une portion de raccordement en coude (352), ladite portion de raccordement en coude (352) étant agencée et conçue pour servir de point de pivotement.

11. Élément filtrant selon la revendication 10, dans lequel ladite première branche (351) desdites protubérances s'étend dans une direction perpendiculaire à un axe longitudinal dudit élément filtrant (1).

12. Élément filtrant selon la revendication 10 ou 11, dans lequel ladite seconde branche (353) de ladite protubérance (3) s'étend dans une direction qui forme un angle avec ladite direction de ladite première branche (351) de ladite protubérance (3) qui est compris dans la plage de 30° à 150°.

13. Élément filtrant selon la revendication 12, comprenant une structure de coque (33) autour d'une périphérie dudit ensemble de milieux filtrants (2) sur au moins une portion d'une longueur axiale dudit ensemble de milieux filtrants (2), ladite structure de coque (33) comprenant une structure de support et de renforcement (30) pour chacune desdites protubérances (3), lesdites structures de support (30) étant chacune en butée sur une surface latérale plane virtuelle, à partir de laquelle lesdites protubérances (3) s'étendent.

14. Élément filtrant selon l'une quelconque des revendications 10 à 13, dans lequel lesdites protubérances (3) s'étendent vers et sont en butée contre un plan défini par une surface extérieure plane de ladite coque (33) ou dudit ensemble de milieux filtrants (2).

15. Élément filtrant selon l'une quelconque des revendications 10 à 14, dans lequel lesdites protubérances (3) comprenant une section transversale globalement en forme de L comprennent un ensemble de structures individuelles qui ne sont pas reliées et/ou comprennent un ou plusieurs évidements ou fentes latéraux, et/ou ouvertures internes, et/ou espaces.
